# EUROPÄISCHE PATENTSCHRIFT

(11) **EP 0 922 354 B1**
(45) Veröffentlichungstag und Bekanntmachung des Hinweises auf die Patenterteilung: **20.10.2004**
(21) Anmeldenummer: 97939952.4
(22) Anmeldetag: 13.08.1997
(51) Int. Cl.: H04M 3/50

(54) **VERFAHREN ZUM EINBEZIEHEN VON FUNKTIONEN EINES AUTOMATISCHEN ANRUFVERTEILUNGS-SYSTEMS IN EIN INTERAKTIVES SPRACHBEANTWORTUNGS-SYSTEM**
PROCESS FOR INCLUDING FUNCTIONS OF AN AUTOMATIC CALL DISTRIBUTOR SYSTEM IN AN INTERACTIVE VOICE RESPONSE SYSTEM
PROCEDE PERMETTANT D'INCLURE DES FONCTIONS D'UN SYSTEME AUTOMATIQUE DE REPARTITION D'APPELS DANS UN SYSTEME DE REPONSE VOCALE INTERACTIF

(30) Priorität: 30.08.1996 DE 19635329
(43) Veröffentlichungstag der Anmeldung: 16.06.1999
(73) Patentinhaber: SIEMENS AKTIENGESELLSCHAFT, 80333 München (DE)
(72) Erfinder: KNITL, Reinhard, D-81243 München (DE); RANZINGER, Alois, D-81737 München (DE); SCHLIWA, Alexander, D-85716 Unterschleissheim (DE)
(86) Internationale Anmeldenummer: PCT/DE1997/001730
(87) Internationale Veröffentlichungsnummer: WO 1998/009424

(56) Entgegenhaltungen:
- EP-A- 0 515 068
- US-A- 5 097 528
- US-A- 5 164 981
- US-A- 5 546 452
- MICHAEL STAHL: "DIALOGIC'S AMX/81 FAMILY OF AUDIO MULTIPLEXER PRODUCTS" SPEECH TECHNOLOGY, MAN-MACHINE VOICE COMMUNICATIONS., Bd. 4, Nr. 1, Oktober 1987, NEW YORK US, Seiten 80-83, XP002062022
- ROBERT J. PERDUE ET AL: "CONVERSANT 1 VOICE SYSTEM : ARCHITECTURE AND APPLICATIONS" AT & T TECHNICAL JOURNAL., Bd. 65, Nr. 5, September 1986, NEW YORK US, Seiten 34-47, XP002062023
- CORDOM C ET AL: "CONVERSANT VIS LISTENS AND TALKS TO YOUR CUSTOMERS WASHINGTON GAS' THRIFT PURCHASE PLAN APPLICATION ENABLES CONTRACTORS TO GET CREDIT AND OTHER CUSTOMER INFORMATION" AT & T TECHNOLOGY, Bd. 9, Nr. 2, 21.Juni 1994, Seiten 22-25, XP000458378

## Beschreibung

An Kommunikationssysteme, insbesondere größere private Kommunikationssysteme, sind interaktive Sprachbeantwortungs-Systeme - in der Fachwelt als Interactive Voice Response Unit bekannt - anschließbar. Ein interaktives Sprachbeantwortungs-System ist beispielsweise aus der europäischen Patentanmeldung 0 611 135 A1 bekannt. Ein Sprachbeantwortungs-System kann von beliebigen, an das Kommunikationssystem angeschlossenen oder über weitere Kommunikationssysteme vermittelte Kommunikationsendgeräten angerufen und gesteuert werden. Meist werden im interaktiven Sprachbeantwortungs-System gespeicherte Informationen - beispielsweise digitalisierte Sprachinformationen über Artikel eines Unternehmens - in Abhängigkeit von den Eingaben des rufenden Kommunikationsendgerätes gesteuert bzw. abgerufen. So kann beispielsweise durch eine Tasteneingabe oder eine Spracheingabe aus mehreren angebotenen bzw. abzurufenden Informationen eine ausgewählt werden. Die ausgewählte Information wird automatisch als Sprachinformation vom Sprachbeantwortungs-System an das rufende Kommunikationsendgerät bzw. den rufenden Teilnehmer übermittelt und dort akustisch wiedergegeben.

Des weiteren sind an Kommunikationssysteme, insbesondere private Kommunikationssysteme, automatische Anrufverteilungs-Systeme anschließbar. Ein automatisches Anrufverteilungs-System ist beispielsweise in der DE 195 35 540 A1 beschrieben. Einem automatischen Anrufverteilungs-Systemen sind an das Kommunikationssystem angeschlossene Agenten-Kommunikationsendgeräte zugeordnet. Ankommende Anrufe mit einer vorgegebenen Rufnummer, beispielsweise eine Sammelrufnummer, werden durch das Kommunikationssystem an das automatische Anrufverteilungs-System geleitet und in diesem wird ein freies Agenten-Kommunikationsendgerät bestimmt. Das automatische AnrufverteilungsSystem beeinflußt das Kommunikationssystem anschließend in der Art, daß der ankommende Anruf an das freie Agenten-Kommunikationsendgerät umgekoppelt wird.

Bei Anrufen an ein interaktives Sprachbeantwortungs-System durch ein Kommunikationsendgerät des Kommunikationsnetzes treten aufgrund des eingeschränkten Sprachbeantwortungsumfangs Situationen ein, bei denen ein rufendes Kommunikationsendgerät bzw. ein rufender Teilnehmer nicht die gewünschte Information erhält. In diesen Fällen wäre es vorteilhaft, eine Person, im weiteren als Agent bezeichnet, die die Informationen bzw. Auskunft geben kann, in die jeweilige Verbindung einzubeziehen.

Aus der US-A-5 164 981 ist ein interaktives Sprachbeantwortungs-System bekannt, daß sowohl mit einem Kommunikations-System als auch mit einer Datenvermittlung verbunden ist. An die Datenvermittlung sind Operatorterminals angeschlossen, an die mit Hilfe der Vermittlungseinrichtung eine Liste von Verbindungsinformationen übermittelt wird, die beim Verbindungsaufbau eines ankommenden Rufes durch das Sprachbeantwortungs-System ermittelt wurde.

In der Druckschrift von M.Stahl, "Dialogic's AMX/81 Family of Audio Multiplexer Products", Speech Technology, MAN-MACHINE VOICE COMMUNICATIONS, 1987 ist eine Systemkonfiguration offenbart, bei dem ein ankommender Ruf zuerst an ein Sprachbeantwortungs-System übermittelt wird. An dieses Sprachbeantwortungs-System ist ein automatisches Anrufverteilungs-System angeschlossen, wobei dieses nicht mit einem Kommunikations-System verbunden ist. Die ankommenden Anrufe werden gegebenenfalls unter Steuerung des Sprachbeantwortungs-Systems an das automatische Anrufverteilungs-System bzw. an die angeschlossenen Agenten bzw. Agenten-Kommunikationsendgeräte weitergeleitet.

Aus der US-A-5 546 452 ist ein Communications System bekannt, bei dem an einen zentralen Controller, der mit einem Kommunikationsnetz verbunden ist, interaktive Sprachbeantwortungs-Systeme angeschlossen sind. Hierbei werden ankommende Anrufe durch den zentralen Controller an die verfügbaren interaktiven Sprachbeantwortungs-Systeme gesteuert und dort bearbeitet.

Die der Erfindung zugrundeliegende Aufgabe besteht darin, Funktionen eines automatischen Anrufverteilungs-Systems in ein interaktives Sprachbeantwortungs-System einzubeziehen. Die Aufgabe wird durch die Merkmale des Patentanspruchs 1 gelöst.

Der wesentliche Aspekt des erfindungsgemäßen Verfahrens ist darin zu sehen, daß das interaktive Sprachbeantwortungs-System und das automatische Anrufverteilungs-System direkt gekoppelt werden und das interaktive Sprachbeantwortungs-System durch ein rufendes Kommunikationsendgerät derart beeinflußt wird, daß von diesem eine Anfrage zur Reservierung eines verfügbaren Agenten bzw. Agenten-Kommunikationsendgerätes an das automatische Anrufverteilungs-System übermittelt wird. Bei einer Reservierung eines angefragten Agenten bzw. Agenten-Kommunikationsendgerätes durch das automatische Anrufverteilungs-System ist das zugeordnete Kommunikationssystem derart beeinflußbar, daß das betroffene Kommunikationsendgerät an das verfügbare Agenten-Kommunikationsendgerät umgekoppelt wird. Mit Hilfe des erfindungsgemäßen Verfahrens können somit Verbindungen, die ein Kommunikationsendgerät des Kommunikationsnetzes zu einem interaktiven Sprachbeantwortungs-System aufgebaut hat, mit Hilfe des Kommunikationssystems umgekoppelt werden, sofern die Anfrage zur Reservierung eines Agenten-Kommunikationsendgerätes ergibt, daß ein verfügbarer Agent bzw. ein Agenten-Kommunikationsendgerät reserviert werden konnte. Durch die direkte Kopplung des interaktiven Sprachbeantwortungs-Systems und des automatischen Anrufverteilungs-Systems kann die Anfrage zur Reservierung eines verfügbaren Agenten ohne Beeinflussung des Kommunikationssystems durchgeführt werden, lediglich die Umkopplung der bereits bestehenden Verbindung wird durch das Kommunikationssystem durchgeführt.

Vorteilhaft wird das interaktive Sprachbeantwortungs-System und das automatische Anrufverteilungs-System über ein lokales Netzwerk gekoppelt, wobei im interaktiven Sprachbeantwortungs-System und im automatischen Anrufverteilungs-System Schnittstellen zum Anschluß an das lokale Netzwerk vorgesehen sind - Anspruch 2. Bei Verwendung eines lokalen Netzwerkes können beispielsweise mehrere interaktive Sprachbeantwortungs-Systeme - beispielsweise unterschiedlicher Firmen - an ein einziges automatisches Anrufverteilungs-System angeschlossen werden.

Vorteilhaft kann bei einer Anfrage zur Reservierung durch das interaktive Sprachbeantwortungs-System der Status zumindest eines der Agenten bzw. der Agenten-Kommunikationsendgeräte des automatischen Anrufverteilungs-Systems abgefragt und die Anfrage zur Reservierung eines Agenten bzw. Agenten-Kommunikationsendgerätes in Abhängigkeit von dem aktuell abgefragten Status des zumindest einen Agenten bzw. Agenten-Kommunikationsendgerätes durchgeführt werden - Anspruch 4. Dies bedeutet, daß vor einer Abfrage zur Reservierung eines freien Agenten bzw. Agenten-Kommunikationsendgerätes eine Statusabfrage durchgeführt werden kann, jedoch nicht notwendigerweise eine Statusabfrage vorausgehen muß. Die Abfrage des Status der Agenten bzw. Agenten- Kommunikationsendgeräte kann unterschiedlichste Folgeaktionen auslösen. Beispielsweise wird eine Nichtverfügbarkeit von Agenten bzw. Agenten-Kommunikationsendgeräten dem mit dem interaktiven Sprachbeantwortungs-System verbundenen Kommunikationsendgerät mitgeteilt, das daraufhin beispielsweise einen Rückrufwunsch beim interaktiven Sprachbeantwortungs-System hinterlegt, um, sofern ein Agent bzw. Agenten-Kommunikationsendgerät verfügbar ist, eine Verbindung zu dem betroffenen Kommunikationsendgerät oder einem beliebigen anderen, einen Rückrufwunsch dem interaktiven Sprachbeantwortungs-System mitgeteilten Kommunikationsendgerät herzustellen und dieses mit dem reservierten Agenten-Kommunikationsendgerät zu verbinden .

Nach einer weiteren vorteilhaften Ausgestaltung der Erfindung wird durch das interaktive Sprachbeantwortungs-System zyklisch der Status zumindest eines Agenten bzw. Agenten-Kommunikationsendgerätes des automatischen Anrufverteilungs-Systems abgefragt und eine Anfrage zur Reservierung eines Agenten bzw. Agenten-Kommunikationsendgerätes in Abhängigkeit von den abgefragten Stati der Agenten bzw. der Agenten-Kommunikationsendgeräte durchgeführt - Anspruch 4. Bei einer zyklischen, d.h. periodischen Abfrage des Status der Agenten bzw. Agenten-Kommunikationsendgeräte kann bei einem Verbindungswunsch eines Kommunikationsendgerätes oder bei Vorliegen eines Rückrufwunsches die Reservierung bei Verfügbarkeit der betroffenen Kommunikationsendgeräte eingeleitet werden.

Vorteilhaft wird im Kommunikationssystem die Umkopplung des betroffenen Kommunikationsendgerätes an das reservierte Agenten-Kommunikationsendgerät durch vom interaktiven Sprachbeantwortungs-System initialisierte Leistungsmerkmale Rückfrage und Übergeben bewirkt - Anspruch 5. Für die Rückfrage ist die Rufnummer des reservierten Agenten-Kommunikationsendgerätes mitzuliefern, wobei diese durch die nachfolgend beschriebenen Meldungsaustausch übermittelt wird.

Gemäß einer weiteren vorteilhaften Ausgestaltung der Erfindung wird bei aktuell nicht verfügbaren Agenten bzw. Agenten-Kommunikationsendgeräten ein von den betroffenen Kommunikationsendgeräten übermittelter Rückrufwunsch im interaktiven Sprachbeantwortungs-System mit der Rufnummerninformation des betroffenen Kommunikationsendgerätes vermerkt und ein automatischer Rückruf mit Hilfe einer weiteren Anfrage zur Reservierung eines verfügbaren Agenten bzw. Agenten-Kommunikationsendgerätes eingeleitet, wobei zuerst die Verbindung zum reservierten Agenten bzw. Agenten-Kommunikationsendgerät und anschließend eine Rückfrageverbindung zum betroffenen Kommunikationsendgerät hergestellt und übergeben wird. - Anspruch 6. Der Rückrufwunsch kann alternativ in einer Hilfseinrichtung - z.B. ein Host-Rechner - gespeichert werden, die zusätzlich an das lokale Netz angeschlossen ist.

Vorteilhaft werden die Anfragen durch Aufträge und Quittierungen dieser Aufträge realisiert - Anspruch 7. Vorteilhaft ist ein Auftrag bzw. eine Quittierung durch einen Auftrags- bzw. Quittierungs-Funktionscode, eine die aktuelle Version der den Auftrag bzw. Quittierung übermittelnden Einrichtung anzeigende Versionsinformation, eine ein automatisches Anrufverteilungs-System identifizierende Identifikation, eine ein interaktives Sprachbeantwortungs-System identifizierende Identifikation, eine einen Auftrag eindeutig identifizierbare Referenzinformation und zumindest einen auftrags- bzw. quittierungsabhängigen Parameter gebildet - Anspruch 8. Alle nachfolgend beschriebenen Aufträge und Quittierungen sind gemäß diesem Format strukturiert. Lediglich durch den angegebenen Funktionscode sowie in der Art und Menge der Parameter unterscheiden sich die unterschiedlichen Aufträge bzw. Quittierungen.

Vorteilhafte Ausgestaltungen der einzelnen Aufträge, wie Logon-Auftrag, Logoff-Auftrag, Statusauftrag, Reservierungsauftrag und Freigabeauftrag sowie die zugehörigen Quittierungen sind in den Patentansprüchen 9 bis 16 beschrieben. Vorteilhafte Ausgestaltungen einer Kommunikationsanordnung zum Einbeziehen von Funktionen eines automatischen Anrufverteilungs-Systems in ein interaktives Sprachbeantwortungs-System sind den Ansprüchen 17 und 18 zu entnehmen.

Im folgenden wird das erfindungsgemäße Verfahren bzw. die erfindungsgemäße Komanunikationsanordnung anhand zweier Blockschaltbilder und eines Ablaufdiagramms näher erläutert.

Dabei zeigen
- FIG 1: in einem Blockschaltbild die erfindungsgemäße Kommunikationsanordnung,
- FIG 2: in einem Blockschaltbild die Struktur von Aufträgen bzw. Quittierungen,
- FIG 3: in einem Ablaufdiagramm ein mögliches Ablaufszenario.

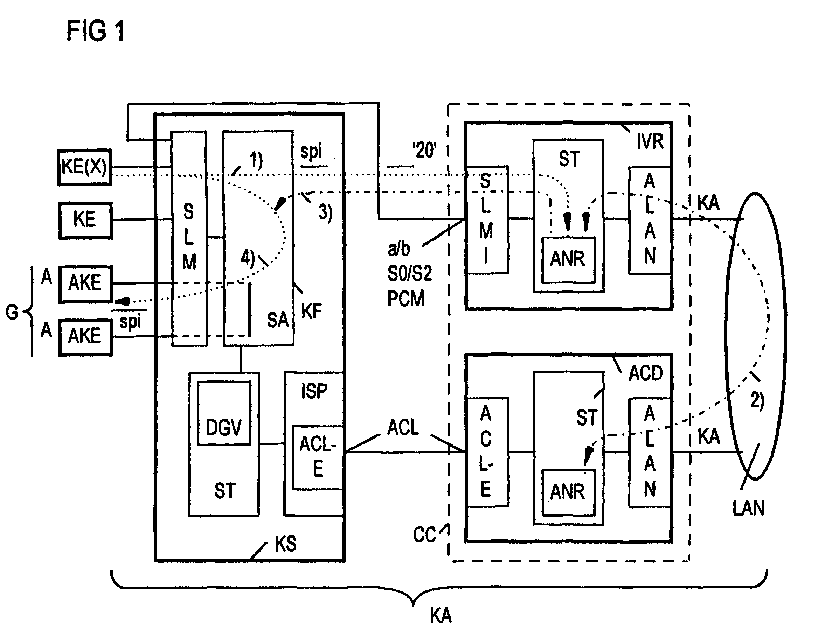

FIG 1 zeigt eine erfindungsgemäße Kommunikationsanordnung KA, bei der an ein Kommunikationssystem KS ein interaktives Sprachbeantwortungs-System IVR und ein automatisches Anrufverteilungs-System ACD angeschlossen ist, wobei das interaktive Sprachbeantwortungs-System IVR im weiteren mit IVR-System IVR und das automatische Anrufverteilungs-System ACD als ACD-System ACD bezeichnet wird. Das Kommunikationssystem kann Teil eines nicht dargestellten Kommunikationsnetzes sein, wobei diese über nicht dargestellte Verbindungsleitungen untereinander verbunden sind. Zur Verbindung des ACD-Systems ACD mit dem Kommunikationssystem KS ist in diesen jeweils eine ACL-Schnittstelle ACL vorgesehen, wobei im Kommunikationssystem KS die ACL-Schnittstelle ACL in einem integrierten Betriebstechnik-Server ISP und im ACD-System ACD in einer ACL-Einheit ACL-E realisiert ist. Die Abkürzung ACL steht für Applications Connectivity Link und bedeutet, daß über diese ACL-Schnittstelle ACL ein Kommunikationsaustausch für eine applikationsabhängige Verbindungssteuerung über eine Verbindung, d.h. link-gesteuert wird. Als applikationsabhängige Verbindungssteuerung ist im ACD-System ACD eine Steuerung ST vorgesehen, in der die automatischen Anrufverteilungs-Funktionen realisiert sind.

Im Kommunikationssystem KS ist für die vermittlungstechnische sowie betriebstechnische Steuerung eine Steuereinrichtung ST vorgesehen, die mit einem Koppelfeld KF und dem integrierten Betriebstechnik-Server ISP verbunden ist. In der Steuereinrichtung ST ist neben den nicht dargestellten, wesentlichen vermittlungs- und betriebstechnischen Programmen eine Programmstruktur DGV für eine Zusammenarbeit mit dem ACD-System ACD implementiert.

Im Koppelfeld KF ist mit Hilfe der Steuereinrichtung ST beispielsweise ein Sammelanschluß SA für den Anschluß von Agenten-Kommunikationsendgeräten AKE konfiguriert. Die einem Sammelanschluß SA zugeordneten Agenten-Kommunikationsendgeräte AKE bilden beispielsweise eine Gruppe G von Agenten- Kommunikationsendgeräten AKE. Die Agenten-Kommunikationsendgeräte AKE und weitere, an das Kommunikationssystem KS angeschlossene Kommunikationsendgeräte KE sind an ein Teilnehmeranschlußmodul SLM angeschlossen, das wiederum mit dem Koppelfeld KF verbunden ist. In den Teilnehmeranschlußmodulen SLM findet die physikalische und prozedurale Anpassung der kommunikationssysteminternen Bedingungen an die kommunikationsendgerätespezifischen Erfordernisse statt - beispielsweise ISDN-Bedingungen.

An dieses beispielsweise durch mehrere Anschlußbaugruppen gebildete Teilnehmeranschlußmodul SLM ist zusätzlich ein IVR-System IVR angeschlossen. Zur Anpassung an die systeminternen Bedingungen ist im IVR-System IVR ein Teilnehmeranschlußmodul SLMI vorgesehen. Die Schnittstelle zwischen dem Kommunikationssystem KS und dem IVR-System IVR ist beispielsweise gemäß der analogen a/b-Telefonie-Schnittstelle a/b oder einer PCM-Mulitplexschnittstelle - beispielsweise durch ein PCM 30 System - oder alternativ gemäß der ISDN-Basis- oder Primärschnittstelle S0/S2 realisiert. Die Realisierung hängt im wesentlichen von der Art der an das Kommunikationssystem KS angeschlossenen Kommunikationsendgeräte KE, AKE und deren Anzahl ab, d.h. bei größeren Kommunikationssystemen KS ist die ISDN-Primärschnittstelle S2 oder eine PCM- Multiplexschnittstelle PCM vorteilhaft.

Sowohl im automatischen Anrufverteilungs-System ACD als auch im IVR-System IVR ist eine zentrale Steuerung ST vorgesehen, in der neben den die wesentlichen Funktionen der automatischen Anrufverteilung- bzw. Sprachbeantwortung realisierenden Routinen - nicht dargestellt - jeweils eine programmtechnisch realisierte Anfrageroutine ANR implementiert ist. Für den prozeduralen und physikalischen Anschluß des ACD-Systems ACD und des IVR-Systems IVR an ein lokalen Netzwerk LAN ist in diesen jeweils eine Netzanschlußeinheit ALAN vorgesehen. Die Netzanschlußeinheit ALAN ist systemseitig jeweils mit der Steuerung ST des IVR- bzw. ACD-Systems IVR, ACD verbunden. Für den Anschluß an das lokale Netz LAN ist jeweils ein Kommunikationsanschluß KA realisiert. Das lokale Netzwerk LAN kann durch ein Bus- oder Ring- oder ein Sternnetz gebildet sein. Hierbei sind Netzzugriffsverfahren wie beispielsweise das CSMA/CD (Carrier Sense Multiple Access with Collision Detection) oder das Token-Ring-Access-Verfahren möglich. Beide stellen nach ANSI/IEEE-Standard standardisierte Verfahren für den Zugriff auf ein lokales Bus-, Stern- oder Ringnetz dar. Entsprechend dem eingesetzten lokalen Netzwerk LAN ist die Anschlußeinrichtung ALAN zu realisieren. Bei beispielsweise einem lokalen Busnetz ist die Anschlußeinrichtung ALAN hinsichtlich des Zugriffsprotokolls und der physikalischen Ausgestaltung des Kommunikationsanschlusses KA gemäß dem IEEE-Standard 802.3 nach dem CSMA/CD-Verfahren zu realisieren. Die Anschlußeinrichtungen ALAN passen des weiteren die über das lokale Netz LAN übermittelten Informationen hinsichtlich ihrer physikalischen und prozeduralen Eigenschaften an die internen Bedingungen des IVR- bzw. ACD-Systems IVR, ACD an, wobei die internen Bedingungen für beide Systeme IVR, ACD gleich sein können. Das IVR-System IVR und das ACD-System ACD können in einem 'Call Center CC' zusammengefaßt werden - in FIG 1 durch eine strichlierte Linie angedeutet.

Für das Ausführungsbeispiel sei angenommen, daß ein Kommunikationsendgerät KE(X) eine Verbindung zum IVR-System IVR aufbaut - in der Fig. 1 durch eine mit 1) bezeichnete punktierte Linie angedeutet. Des weiteren sei angenommen, daß an diesem Kommunikationsendgerät KE(X) nach einer sprachlichen Vorstellung des IVR-Systems IVR durch Tasteneingaben unterschiedliche Informationen abrufen werden, die als Sprachinformationen spi an das Kommunikationsendgerät KE(X) übermittelt werden. Für das Ausführungsbeispiel sei weiterhin angenommen, daß das IVR-System IVR eine vom Kommunikationsendgerät KE(X) bzw. Teilnehmer angeforderte Informationen nicht automatisch liefern kann, sondern hierfür eine Auskunftsperson, d.h. einen Agenten A bzw. ein Agenten-Kommunikationsendgerät AKE benötigt. Um die Einbeziehung eines Agenten bzw. einer automatischen Anrufverteilungs-Funktion zu erhalten, wird beispielsweise vom Kommunikationsendgerät KE(X) durch eine spezielle Tasteneingabe - beispielsweise die Ziffer 20 - dem IVR-System IVR mitgeteilt, daß ein Agent A für eine Auskunft bzw. Information, die das interaktive Sprachbeantwortungs-System nicht liefern kann, einbezogen werden soll.

Durch die in der Steuerung ST des IVR-Systems IVR implementierte Anfrageroutine ANR wird daraufhin eine durch Aufträge a und Quittierungen q realisierte Anfrage über das lokale Netz LAN an das automatische Anrufverteilungs-System ACD gerichtet. Durch welche Meldungen dies bewirkt wird, ist in einem nachfolgenden Kapitel beschrieben. Die generelle Anfrage ist in FIG 1 durch eine mit 2) bezeichnete strichpunktierte Linie angedeutet. Nach einem Reservieren eines verfügbaren, d.h. freien Agenten A bzw. eines freien Agenten-Kommunikationsendgerätes AKE werden von der in der Steuerung ST des IVR-Systems IVR implementierten Anfrageroutine ANR für das betroffene Kommunikationsendgerät KE(x) die Leistungsmerkmal Rückfrage und Übergeben aktiviert, wozu die im Rahmen der Anfrage übermittelte Rufnummer des reservierten Agenten-Kommunikationsendgerätes AKE vorgesehen ist - in der FIG 1 durch eine mit 3) bezeichnete strich-punktierte Linie angedeutet. Durch die Aktivierung der beiden Leistungsmerkmale Rückfrage und Übergeben wird das Kommunikationssystem KS eine Umkopplung des Kommunikationsendgerätes KE(X) vom IVR-System IVR an den reservierten Agenten A bzw. das reservierte Agenten-Kommunikationsendgerät AKE bewirkt - in FIG 1 durch eine punktierte Linie mit der Bezeichnung 4) angedeutet. Bei dieser Vorgehensweise wird das ACD-System ACD und das Kommunikationssystem KS minimal belastet.

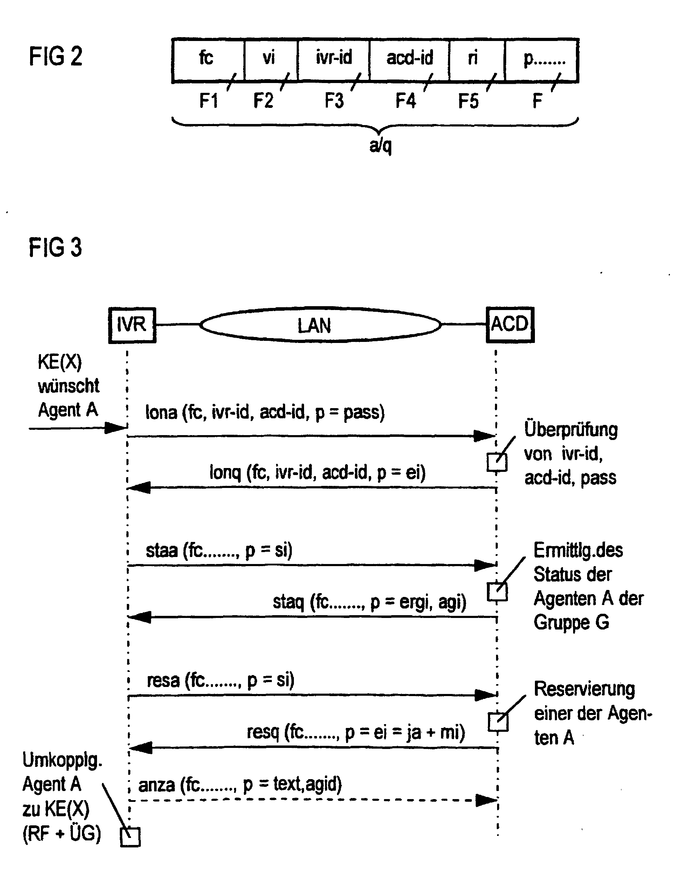

Die Anfragen bezüglich eines verfügbaren Agenten bzw. eines Agenten-Kommunikationsendgerätes AKE werden mittels unterschiedlichsten Aufträgen a und Quittierungen q realisiert, denen ein einheitliches Auftrags-/Quittierungsformat zugrundeliegt. Dieses einheitliche Auftrags-/Quittierungsformat ist in FIG 2 schematisch dargestellt. Die meldungsorientierten Aufträge a bzw. Quittierungen q umfassen ein erstes Feld F1, in das ein Auftrags- bzw. Quittierungs-Funktionscode fc eingetragen wird. Durch diesen Auftrags- bzw. Quittierungs-Funktionscode fc wird die Art eines Auftrags a oder einer Quittierung q angezeigt. In ein zweites Feld F2 ist optional eine Versionsinformation vi eintragbar, die die aktuelle Version des den Auftrag bzw. die Quittierung a, q übermittelten Systems - entweder des IVR-Systems IVR oder ACD-Systems ACD - anzeigt. Die opitional einfügbare Versionsinformation vi dient zu Trace- und Diagnosezwecken und weist für eine Bewertung bzw. Auswertung eines Auftrags a bzw. einer Quittierung q keine Bedeutung auf.

In ein drittes bzw. viertes Feld F3, F4 wird eine ein ACD-System ACD bzw. eine ein IVR-System IVR identifizierende Identifikation acd-id, ivr-id eingefügt. Beispielsweise sind als Identifikationen acd-id, ivr-id die Namen, d.h. die Bezeichnung des jeweiligen Systems IVR, ACD vorgesehen. Zur eindeutigen Identifizierung eines Auftrags a bzw. einer Quittierung q ist in ein fünftes Feld F5 eine Referenzinformation ri bzw. eine Referenznummer eingetragen. Diese Referenzinformation ri wird in die einen Auftrag a quittierende Quittierung q eingetragen, um die Zugehörigkeit der Quittierung q zu dem jeweiligen Auftrag a zu gewährleisten. In ein letztes Feld F werden auftrags- bzw. quittierungsabhängige Parameter p eingetragen. Je nach Art des Auftrags a bzw. der Quittierung q werden unterschiedliche Parameter p in das nur wenige Byte oder auch eine Vielzahl von Bytes umfassende Feld F eingefügt.

Im folgenden sind die vom IVR-System IVR an ACD-System ACD möglichen, gerichteten Aufträge a sowie die Quittierungen q aufgelistet. Hierbei ist für jeden unterschiedlichen, aufgelisteten Auftrag a bzw. Quittierung q ein unterschiedlicher Funktionscode fc vorgesehen, der beispielsweise durch einen vierstelligen ASCII-Wert (0100, 0200...) angegeben wird.

### Logon-Auftrag (lona):

Jedes IVR-System IVR, das mit einem ACD-System ACD über das lokale Netzwerk LAN kommunizieren will, muß sich bei diesem mit einem Logen-Auftrag lona anmelden und mit einem Paßwort pass autorisieren. Das ACD-System ACD prüft, ob die übermittelte Identifikation ivr-id bekannt ist und ob das ebenfalls mitgegebene Paßwort pass bzw. die Zugriffssicherungsinformation dieser Identifikation ivr-id zugeordnet ist.

### Logon-Quittierung lonq:

Als Antwort auf einen Logen-Auftrag lona wird vom ACD-System ACD über das lokale Netzwerk LAN an das IVR-System IVR eine Logon-Quittierung lonq übermittelt. Eine als Parameter p im Feld F eingefügte Ergebnisinformation ei gibt dem IVR-System IVR Auskunft, ob seine Anmeldung akzeptiert oder warum diese zurückgewiesen wird. Mögliche Zurückweisungsgründe sind beispielsweise ein ungültiges Paßwort pass, eine unbekannte Identifikation ivr-id oder es wurde bereits eine Anmeldung durchgeführt.

### Logoff-Auftrag lofa:

Mit diesem Logoff-Auftrag lofa meldet sich IVR-System IVR beim ACD-System ACD ab.

### Logoff-Quittierung lofq:

Durch diese Logoff-Quittierung lofq wird der Logoff-Auftrag lofa durch das ACD-System ACD quittiert. Eine als Parameter p eingefügte Ergebnisinformation ei gibt Auskunft, ob der Logon-Auftrag lofa akzeptiert bzw. aus welchen Gründen er zurückgewiesen wird. Zurückweisungsgründe entsprechen beispielsweise den bei der Logon-Quittierung lonq.

### Status-Auftrag staa:

Mit diesem Status-Auftrag staa wird der aktuelle Status einer Gruppe von Agenten A bzw. Gruppe von Agenten- Kommunikationsendgeräten AKE beim ACD-System ACD angefordert. Beispielsweise wird die Gruppe G nicht direkt angegeben, sondern eine Serviceinformation si als Parameter p in das Feld F eingefügt. Die Serviceinformation si ist beispielsweise durch Servicenummern repräsentiert, wobei die Servicenummern beispielsweise unterschiedliche Fachgebiete repräsentieren und unterschiedliche Servicenummern einer Gruppe G von Agenten A zugeordnet sein können.

### Status-Quittierung staq:

Die Status-Quittierung staq stellt die Antwortmeldung auf einen Status-Auftrag staa dar und wird vom ACD-System ACD über das lokale Netzwerk LAN an das IVR-System IVR übermittelt. Als Parameter p sind in das Feld F folgende Informationen einfügbar:
- Eine Ergebnisinformation ergi, die die Zulässigkeit des Status-Auftrags staa anzeigt bzw. Auskunft gibt, ob der Status-Auftrag staa akzeptiert bzw. zurückgewiesen wird. Die Gründe sind beispielsweise die bei den vorhergehend erwähnten Quittierungen lonq, lofq.
- Eine Zustandsinformation zusi zeigt an, in welchem Betriebszustand sich das ACD-System ACD befindet, beispielsweise Tag-Nacht-Betrieb oder in einem Initialisierungszustand.
- Durch eine Anmeldeinformation amei wird die Anzahl der beim ACD-System ACD angemeldeten Agenten A bzw. Agenten- Kommunikationsendgeräte AKE angegeben.
- Durch eine Agenteninformation agi wird die Anzahl der freien Agenten A bzw. der freien Agenten- Kommunikationsendgeräte AKE der durch die jeweilige Serviceinformation si bestimmten Gruppe G angezeigt.
- Eine Belegtinformation beli zeigt die Anzahl der belegten bzw. beschäftigten Agenten A bzw. Agenten- Kommunikationsendgeräte AKE an.
- Eine Verfügbarkeitsinformation vfbi zeigt die Anzahl der nicht verfügbaren Agenten A bzw. Agenten- Kommunikationsendgeräte AKE an.
- Des weiteren sind optional zusätzliche Informationen wie beispielsweise der mit Nachbearbeitung beschäftigten Agenten A oder statistische Informationen über Anzahl wartender Rufe usw. einfügbar. Die vorgehend aufgelisteten Informationen werden im IVR-System IVR bewertet bzw. ausgewertet und es kann eine Folgeaktion abgeleitet werden. Eine wesentliche Folgeaktion bzw. Entscheidung ist darin zu sehen, ob aktuell ein freier Agent A bzw. ein freies Agenten-Kommunikationsendgerät AKE reserviert oder nicht reserviert werden soll.

### Reservierungs-Auftrag resa:

Dieser Reservierungs-Auftrag resa dient zum Reservieren von Agenten A bzw. Agenten-Kommunikationsendgeräten AKE, das anschließend mit Hilfe des Kommunikationssystems KS an den aktuell am IVR-System IVR anrufenden Kommunikationsendgerät KE(x) umgekoppelt wird.

Ein Reservierungs-Auftrag resa kann als Parameter p im Feld F folgende Informationen enthalten:
- Durch eine eingefügte Serviceinformation si wird aus einer durch die Serviceinformation si bestimmten Gruppe G von Agenten A bzw. Agenten-Kommunikationsendgeräten AKE ein beliebiger Agent A bzw. beliebiges Agenten- Kommunikationsendgerät AKE für eine Reservierung angefordert. Eine Reservierung bedeutet, daß der jeweilige Agent A bzw. das jeweilige Agenten-Kommunikationsendgerät AKE nicht mehr an weitere ankommende Anrufe umgekoppelt wird.
- Durch eine eingefügte Agentenidentifikation agid wird die Reservierung einer bestimmten, d.h. durch die Agentenidentifikation agid Person, d.h. bestimmten Agenten A angefordert, wobei automatisch das zugeordnete Agenten-Kommunikationsendgerät AKE bestimmt ist.
- Eine Warteinformation wari zeigt die Zeitspanne beispielsweise in Sekunden an, die maximal gewartet werden soll, wenn ein bestimmter Agent A bzw. ein beliebiger Agent A einer Gruppe G nicht sofort reserviert werden kann. Nach Ablauf dieser Zeitspanne wird auf eine Reservierung eines bestimmten oder beliebigen Agenten A verzichtet.
- Durch eine eingefügte Statusinformation stai wird eine nicht sofortige mögliche Reservierung des jeweiligen Agenten A bzw. Agenten-Kommunikationsendgerätes AKE dem IVR-System IVR mitgeteilt.

### Reservierungs-Quittierung resq:

Diese Meldung stellt die Quittung auf einen Reservierungs-Auftrag resa dar. Als Parameter p in das Feld F sind folgende Informationen eingefügt:
- Eine Ergebnisinformation regi, die die Zulässigkeit des Reservierungs-Auftrags resa anzeigt bzw. Auskunft gibt, ob der Reservierungs-Auftrag resa akzeptiert oder zurückgewiesen wird.
- Eine Serviceinformation si, die aus dem Reservierungs- Auftrag resa übernommen ist.
   Eine Agenteninformation agid, durch die eine bestimmte Person, d.h. ein bestimmter Agent A bzw. ein bestimmtes Agenten-Kommunikationsendgerät AKE definiert ist.
- Durch eine Agentenstatusinformation asti wird dem IVR-System IVR mitgeteilt, welchen Status der angeforderte Agent A bzw. das angeforderte Agenten- Kommunikationsendgerät AKE aufweist. Mögliche Stati sind beispielsweise Agent A ist nicht angemeldet, Agent A ist nicht verfügbar, Agent A ist bereits reserviert usw..

### Freigabe-Auftrag frea:

Dieser Freigabe-Auftrag frea kann sowohl bei laufender Reservierung eines Agenten A oder bei einer bereits abgeschlossenen Reservierung eines Agenten A übermittelt werden, wobei ein Freigabe-Auftrag frea jeweils die umgehende Freigabe eines in Reservierung befindlichen oder reservierten Agenten A bzw. Agenten-Kommunikationsendgerätes AKE bewirkt.

### Anzeige-Auftrag anza:

Durch einen Anzeige-Auftrag anza kann ein vom IVR-System IVR mitgegebener Text über das ACD-System ACD an einen bestimmten Agenten A bzw. ein bestimmtes Agenten-Kommunikationsendgerät AKE übermittelt werden, wobei beim jeweiligen Agenten-Kommunikationsendgerät AKE ein Aufmerksamkeitston akustisch wiedergegeben werden kann. Um Kollisionen mit anderen Anzeigemöglichkeiten zu vermeiden, sollte dieser Anzeige-Auftrag anza nur zu bereits reservierten Agenten-Kommunikationsendgeräten AKE verwendet werden. Als Parameter p im Feld F sind die Agentenidentifikation agid des bestimmten Agenten A bzw. Agenten- Kommunikationsendgerätes AKE, die zu übermittelnde Information text und optional kann eine Zeitinformation zei und eine Aufmerksamkeitsinformation aufi eingefügt werden. Die Zeitinformation zei gibt die Anzeigezeit der Information text beim bestimmten Agenten-Kommunikationsendgerät AKE an und die Aufmerksamkeitsinformation bewirkt, daß beim bestimmten Agenten- Kommunikationsendgerät AKE ein Aufmerksamkeitston akustisch wiedergegeben wird.

FIG 3 zeigt anhand eines Ablaufdiagramms ein mögliches Ablaufszenario, bei dem durch das IVR-System IVR zuerst durch einen Logen-Auftrag lona beim ACD-System ACD angemeldet und die Zulässigkeit der Anmeldung durch eine Logon-Quittierung lonq bestätigt wird. Um den allgemeinen Status von Agenten A bzw. Agenten-Kommunikationsendgeräten AKE einer Gruppe G zu ermitteln, wird ein Status-Auftrag staa mit einer Serviceinformation si, mit der die betroffene Gruppe G adressiert ist, übermittelt. In der an das IVR-System IVR übermittelte Status-Quittierung staq ist beispielsweise eine Ergebnisinformation ergi eingefügt, die eine erfolgreiche Statusabfrage anzeigt. Des weiteren ist beispielsweise eine die Anzahl der freien Agenten A in der Gruppe G anzeigende Agenteninformation agi, beispielsweise die Zahl drei für drei freie Agenten A eingefügt. Daraufhin wird vom IVR-System IVR ein Reservierungs-Auftrag resa mit der gleichen Serviceinformation si an das ACD-System ACD übermittelt, worauf in diesem einer der freien Agenten A reserviert wird. Die Reservierung wird durch eine Reservierungs-Quittierung resq bestätigt, in der als Ergebnisinformation ei eine erfolgreiche Reservierung angezeigt und eine Rufnummerninformation rni eingefügt ist, durch die der reservierte Agent A bzw. das reservierte Agenten-Kommunikationsendgerät AKE adressiert ist. Um dem Agenten A eine Information über den Vordialog des rufenden Kommunikationsendgerätes KE(X) mit dem IVR-System IVR zu übermitteln, werden die Aufzeichnungen in einen Anzeige-Auftrag anza als Informationen text eingefügt und über das ACD-System ACD und das Kommunikationssystem KS an den reservierten Agenten AKE übermittelt - in FIG 3 durch einen strichlierte Linie angedeutet.

Folgende Varianten sind in FIG 3 nicht mehr dargestellt, sind jedoch anhand der dort angegebenen Aufträge a und Quittierung q durchführbar. Ist kein Agent A frei, teilt das IVR-System IVR dies dem rufenden Kommunikationsendgerät KE(X) mit und bietet zwei Varianten an, nämlich Warten bis ein Agent A frei ist oder einen Rückruf aktivieren. In beiden Fällen übermittelt das IVR-System IVR Status-Aufträge staa, um festzustellen, ob ein Agent A frei geworden ist. Bei einem Freiwerden wird bei einem wartenden, rufenden Kommunikationsendgerät KE(X) die Reservierung des freien Agenten A eingeleitet und bei einer Aktivierung des Rückrufs wird vorher eine Verbindung zu dem ursprünglich rufenden Kommunikationsendgerät KE(X) aufgebaut, wobei eine Verbindung zu dem betroffenen Kommunikationsendgerät KE(X) oder einem beliebig anderen, einen Rückrufwunsch dem IVR-System IVR mitgeteilten Kommunikationsendgerät hergestellt und anschließend dieses mit dem reservierten Agenten-Kommunikationsendgerät AKE verbunden wird.

Eine gänzlich unterschiedliche Vorgehensweise besteht darin, daß das IVR-System IVR zyklisch, d.h. periodisch Status-Aufträge staa an das ACD-System ACD übermittelt, um festzustellen, ob Agenten A in welchen Gruppen G belegt bzw. frei sind. Gemäß einer ersten Variante wird bei Vorliegen eines Zuteilungswunsches eines Agenten A eines Kommunikationsendgerätes KE umgehend die Reservierung eines der freien Agenten A eingeleitet und dann die Verbindung durch das IVR-System IVR umgekoppelt. Bei einem Zuteilungswunsch eines freien Agenten A eines Kommunikationsendgerätes KE(X), das die Verbindung zum IVR-System IVR bereits abgebaut hat, wird durch dieses die Verbindung bei einem Feststellen eines freien Agenten A aufgebaut, anschließend der freie Agent A reserviert und die Verbindung zu diesem umgekoppelt.

## Patentansprüche

1. Verfahren zum Einbeziehen von Funktionen eines automatischen Anrufverteilungs-Systems (ACD) in ein interaktives Sprachbeantwortungs-Systems (IVR), das durch Kommunikationsendgeräte (KE) des Kommunikationsnetzes (KN) angerufen und gesteuert wird, wobei das interaktive Sprachbeantwortungs-System (IVR) und das automatische Anrufverteilungs-System (ACD) an ein Kommunikationssystem (KS) eines Kommunikationsnetzes (KN) angeschlossen und dem automatischen Anrufverteilungs-System (ACD) zumindest ein an zumindest ein Kommunikationssystem (KS) angeschlossenes Agenten-Kommunikationsendgerät (AKE) zugeordnet ist, **dadurch gekennzeichnet, daß**
- das interaktive Sprachbeantwortungs-System (IVR) und das automatische Anrufverteilungs-System (ACD) direkt gekoppelt sind,
- durch ein Kommunikationsendgerät (KE) das interaktive Sprachbeantwortungs-Systems (IVR) derart beeinflußbar ist, daß von diesem eine Anfrage zur Reservierung (resa,resq) eines verfügbaren Agenten (A) bzw. Agenten-Kommunikationsendgerätes (AKE) an das automatische Anrufverteilungs- System (ACD) übermittelt wird, und
- bei einer Reservierung eines angefragten Agenten (A) bzw. Agenten-Kommunikationsendgerätes (AKE) das Kommunikationssystem (KS) derart beeinflußt wird, daß das betroffene Kommunikationsendgerät (KE) an das reservierte Agenten-Kommunikationsendgerät (AKE) umgekoppelt wird.

2. Verfahren nach Anspruch 1, **dadurch gekennzeichnet, daß** das interaktives Sprachbeantwortungs-System (IVR) und das automatische Anrufverteilungs-System (ACD) über ein lokales Netzwerk (LAN) gekoppelt sind, wobei im interaktiven Sprachbeantwortungs-System (IVR) und im automatischen Anrufverteilungs-System (ACD) Schnittstellen (KA) zum Anschluß an das lokale Netzwerk (LAN) vorgesehen sind.

3. Verfahren nach Anspruch 1 oder 2, , **dadurch gekennzeichnet, daß** vor einer Anfrage (resa,resq) zur Reservierung (resa,resq) durch das interaktive Sprachbeantwortungs-System (IVR) der Status zumindest eines der Agenten (A) bzw. der Agenten-Kommunikationsendgeräte (AKE) des automatischen Anrufverteilungs-Systems (ACD) abgefragt werden kann und die Anfrage (resa,resq) zur Reservierung eines Agenten (A) bzw. Agenten-Kommunikationsendgerätes (AKE) wird in Abhängigkeit von dem aktuell abgefragten Status des zumindest einen Agenten (A) bzw. Agenten-Kommunikationsendgerätes (AKE) durchgeführt.

4. Verfahren nach Anspruch 1 oder 2, **dadurch gekennzeichnet, daß** durch das interaktive Sprachbeantwortungs-System (IVR) zyklisch der Status zumindest einen Agenten (A) bzw. Agenten-Kommunikationsendgerätes (AKE) des automatischen Anrufverteilungs-Systems (ACD) abgefragt wird und daß eine Anfrage (resa,resq) zur Reservierung eines Agenten (A) bzw. Agenten-Kommunikationsendgerätes (AKE) in Abhängigkeit von den abgefragten Stati der Agenten (A) bzw. der Agenten-Kommunikationsendgeräte (AKE) durchgeführt wird.

5. Verfahren nach einem der Ansprüche 1 bis 4, , **dadurch gekennzeichnet, daß** im Kommunikationssystem (KS) die Umkopplung des betroffenen Kommunikationsendgerätes (KE(x)) an das reservierte Agenten-Kommunikationsendgerät (AKE) durch vom interaktiven Sprachbeantwortungs-System (IVR) initialisierte Leistungsmerkmale Rückfrage und Übergeben bewirkt wird.

6. Verfahren nach einem der Ansprüche 1 bis 5, , **dadurch gekennzeichnet, daß** bei aktuell nicht verfügbaren Agenten (A) bzw. Agenten-Kommunikationsendgeräten (AKE) ein von den betroffenen Kommunikationsendgeräten (KE(x)) übermittelter Rückrufwunsch im interaktiven Sprachbeantwortungs-System (IVR) mit der Rufnummerninformation (ri) des betroffenen Kommunikationsendgerätes (KE(x) vermerkt wird, und daß ein automatischer Rückruf mit Hilfe einer weiteren Anfrage zur Reservierung eines verfügbaren Agenten (A) bzw. Agenten-Kommunikationsendgerätes (AKE) eingeleitet wird, wobei zuerst die Verbindung zum reservierten Agenten-Kommunikationsendgerät (AKE) und anschließend eine Rückfrageverbindung zum betroffenen Kommunikationsendgerät (KE(X)) hergestellt und übergeben wird.

7. Verfahren nach einem der Ansprüche 1 bis 6, **dadurch gekennzeichnet, daß** für Anfragen zwischen dem interaktiven Sprachbeantwortungs-System (IVR) und dem automatischen Anrufverteilungs-System (ACD) Aufträge (a) und Quittierungen (q) vorgesehen sind.

8. Verfahren nach Anspruch 7, **dadurch gekennzeichnet, daß** ein Auftrag bzw. eine Quittierung (a,q) durch
- einen Auftrags- bzw. Quittierungs-Funktionscode (fc),
- eine die aktuelle Version der den Auftrag bzw. Quittierung ( ) übermittelnden Systems (IVR,ACD) anzeigende Versionsinformation (vi),
- eine ein automatische Anrufverteilungs-System (ACD) identifizierende Identifikation (acd-id),
- eine ein interaktives Sprachbeantwortungs-System (IVR) identifizierende Identifikation (ivr-id),
- eine einen Auftrag (a) eindeutig identifizierbare Referenzinformation (ri), und
- zumindest einen auftrags-. bzw. quittierungsabhängigen Parameter (p).

9. Verfahren nach einem der Ansprüche 1 bis 8, **dadurch gekennzeichnet, daß** ein das interaktive Sprachbeantwortungs-System (IVR) beim automatischen Anrufverteilungs-Stystem (ACD) anmeldende Logon-Auftrag (lona) übermittelt wird, der vom automatischen Anrufverteilungs-System (ACD) mit einer Logon-Quittierung (lonq) beantwortet wird, wobei im Logon-Auftrag (lona) als Parameter (p) eine Zugriffssicherungsinformation (pass) und in der Logon-Quittierung (lonq) das Überprüfungsergebnis des Logon-Auftrags (lona) eingefügt ist.

10. Verfahren nach einem der Ansprüche 1 bis 9, **dadurch gekennzeichnet, daß** ein das interaktive Sprachbeantwortungs-System (IVR) beim automatischen Anrufverteilungs-Stystem (ACD) abmeldender Logoff-Auftrag (lofa) übermittelt wird, der vom automatischen Anrufverteilungs-System (ACD) mit einer Logoff-Quittierung (lofq) beantwortet wird, wobei im Logoff-Auftrag (lofq) als Parameter (p) eine Zugriffssicherungsinformation (pass) und in der Logoff-Quittierung (lofq) das Überprüfungsergebnis des Logoff-Auftrags (lofa) eingefügt ist.

11. Verfahren nach einem der Ansprüche 1 bis 10, **dadurch gekennzeichnet, daß** im Rahmen einer Anfrage (resa,resq) zur Reservierung eines Agenten (A) bzw. Agenten-Kommunikationsendgerätes (AKE) ein den aktuellen Status eines automatischen Anrufverteilungs-Systems (ACD) anfordernde Status-Auftrag (staa) vom interaktiven Sprachbeantwortungs-System (IVR) an das automatische Anrufverteilungs-System (ACD) übermittelt wird, wobei als Parameter (p) zumindest eine einen Agenten (A) identifizierende Agenteninformation (agid) oder eine Gruppe (G) von Agenten (A) bzw. ein Agenten-Kommunikationsendgerät (AKE) oder eine Gruppe (G) von Agenten-Kommunikationsendgeräten (AKE) anzeigende Serviceinformation (si) eingefügt ist.

12. Verfahren nach Anspruch 11, **dadurch gekennzeichnet, daß** nach Übermittlung eines Status-Auftrags (staa) vom automatischen Anrufverteilungs-System (ACD) eine Status-Quittierung (staq) übermittelt wird, wobei in eine Status-Quittierung (staq) in Abhängigkeit von dem Status-Auftrag (staa)
- eine die Überprüfung der Zulässigkeit des Status-Auftrags (staa) anzeigende Ergebnisinformation (ergi), und/oder
- eine den Betriebszustand des automatische Anrufverteilungs-Systems (ACD) anzeigende Zustandsinformation (zusi) und/oder
- eine die Anzahl der freien Agenten (A) bzw. Agenten-Kommunikationsendgeräte (AKE) anzeigende Agenteninformation (agi), und/oder
- eine die Anzahl der angemeldeten Agenten (A) bzw. Agenten-Kommunikationsendgeräte (AKE) anzeigende Anmeldeinformation (amei), und/oder
- eine die Anzahl der belegten Agenten bzw. Agenten-Kommunikationsendgeräte (AKE) anzeigende Belegtinformation (beli), und/oder
- eine die Anzahl der nicht verfügbaren Agenten (A) bzw. Agenten-Kommunikationsendgeräte (AKE) anzeigende Verfügbarkeitsinformation (vfbi)
einfügbar ist.

13. Verfahren nach einem der Ansprüche 1 bis 12, **dadurch gekennzeichnet, daß** ein die Reservierung von Agenten (A) bzw. Agenten-Kommunikationsendgeräte (AKE) bewirkender Reservierungs-Auftrag (resa) vom interaktiven Sprachbeantwortungs-System (IVR) an das automatische Anrufverteilungs-System (ACD) übermittelt wird, wobei als Parameter (p)
- eine einen beliebigen verfügbaren Agenten (A) bzw. ein Agenten-Kommunikationsendgerät (AKE) einer Gruppe (G) von Agenten (A) bzw. Agenten-Kommunikationsendgeräten (AKE-G) anfordernde Serviceinformation (si) oder
- eine eine bestimmte Person bzw. Agenten (A) anfordernde Agentenidentifikation (agid), und/oder
- eine die Zeitspanne auf das Warten eines bestimmten oder eines von einer Gruppe (G) von Agenten (A) bzw. Agenten-Kommunikationsendgeräten (AKE) anzeigende Warteinformation (wari) und/oder
- eine das Melden oder Nichtmelden des Status des Reservierungs-Auftrags (resa) anzeigende Statusinformation (stai) einfügbar ist.

14. Verfahren nach Anspruch 13, **dadurch gekennzeichnet, daß** nach Übermittlung eines Reservierungs-Auftrags (resa) vom automatischen Anrufverteilungs-System (ACD) eine Reservierungs-Quittierung (resq) übermittelt wird, wobei in eine Reservierungs-Quittierung (staq) in Abhängigkeit von dem Reservierungs-Auftrag (resa)
- eine die Überprüfung der Zulässigkeit des Reservierungs-Auftrags (resa) anzeigende Ergebnisinformation (ergi),
- eine die Gruppe (G) von Agenten (A) bzw. Agenten-Kommunikationsendgeräte (AKE-G) anzeigende Serviceinformation (si)
- eine die Reservierung des angeforderten Agenten (A) anzeigende Agentenidentifikation (agid)
- und eine die Rufnummer des reservierten Agenten (A) bzw. Agenten-Kommunikationsendgerätes (AKE) anzeigende Rufnummerninformation (rni) oder
- eine den Status des angeforderten Agenten (A) bzw. Agenten-Kommunikationsendgerätes (AKE) anzeigende Agentenstatusinformation (asti)
eingefügt ist.

15. Verfahren nach Anspruch 13 oder 14, **dadurch gekennzeichnet, daß** ein einen reservierten Agenten (A) bzw. ein Agenten-Kommunikationsendgerät (AKE) freigebenden Freigabe-Auftrag (frea) vom interaktiven Sprachbeantwortungs-System (IVR) an das automatische Anrufverteilungs-System (ACD) übermittelbar ist, wobei als Parameter (p) eine die Identifikation des freizugebenden Agenten (A) bzw. Agenten-Kommunikationsendgerätes (AKE) anzeigende Agentenidentifikation (agid) eingefügt ist.

16. Verfahren nach einem der Ansprüche 1 bis 15, **dadurch gekennzeichnet, daß** vom interaktiven Sprachbeantwortungs-System (IVR) an das automatische Anrufverteilungs-System (ACD) ein eine Anzeige bei einem bestimmten Agenten-Kommunikationsendgerät (AKE) bewirkender Anzeige-Auftrag (anza) übermittelbar ist, wobei als Parameter (p)
- eine ein bestimmtes Agenten (A) bzw. Agenten-Kommunikationsendgerät (AKE) identifizierende Agentenidentifikation (agid),
- eine beim Agenten-Kommunikationsendgerät (AKE) anzuzeigende Information (text), und optional
- eine die Anzeigedauer beim Agenten-Kommunikationsendgerät (AKE) anzeigende Zeitinformation (zei), und/oder
- eine beim betroffenen Agenten-Kommunikationsendgerät (AKE) einen Aufmerksamkeitston und/oder eine Aufmerksamkeitsanzeige bewirkende Aufmerksamkeitinformation (aufi)
eingefügt ist.

17. Kommunikationsanordnung zum Einbeziehen von Funktionen eines automatischen Anrufverteilungs-Systems (ACD) in ein interaktives Sprachbeantwortungs-Systems (IVR), das durch Kommunikationsendgeräte (KE) eines Kommunikationsnetzes (KN) angerufen und gesteuert wird, **dadurch gekennzeichnet, daß**
- das interaktive Sprachbeantwortungs-System (IVR) und das automatische Anrufverteilungs-System (ACD) an ein Kommunikationssystem (KS) des Kommunikationsnetzes (KN) angeschlossen sind, wobei dem automatischen Anrufverteilungs-System (ACD) zumindest ein an zumindest ein Kommunikationssystem (KS) angeschlossenes Agenten-Kommunikationsendgerät (AKE) zugeordnet ist,
- im interaktiven Sprachbeantwortungs-System (IVR) und im automatische Anrufverteilungs-System eine Schnittstelle (KA) zum Anschluß an ein lokales Netz (LAN)(ACD) realisiert ist,
- die beiden Schnittstellen (KA) über ein lokales Netzwerk (LAN) miteinander verbunden sind,
- im interaktiven Sprachbeantwortungs-System (IVR) und im automatische Anrufverteilungs-System (ACD) programmtechnische Mittel vorgesehen sind, die von einem mit dem interaktiven Sprachbeantwortungs-System (IVR) verbundenen Kommunikationsendgerät (KE) derart beeinflußbar sind, daß vom interaktiven Sprachbeantwortungs-System (IVR) eine Anfrage zur Reservierung eines verfügbaren Agenten (A) bzw. Agenten-Kommunikationsendgerät (AKE) an das gekoppelte, automatische Anrufverteilungs- System (ACD) übermittelt wird,
- im automatischen Anrufverteilungs-System (ACD) Mittel zum Reservieren von verfügbaren Agenten (A) bzw. Agenten-Kommunikationsendgeräten (AKE) und zum Mitteilen der Reservierung an das interaktiven Sprachbeantwortungs-System (IVR) vorgesehen sind, und
- im interaktiven Sprachbeantwortungs-System (IVR) Mitteln zum Beeinflussen des zugeordneten Kommunikationssystems (KS) derart vorgesehen sind, daß das betroffenen Kommunikationsendgerät (KE) an das reservierte Agenten-Kommunikationsendgerät (AKE) umgekoppelt wird.

18. Kommunikationsanordnung nach Anspruch 17, **dadurch gekennzeichnet, daß** im interaktiven Sprachbeantwortungs-System (IVR) programmtechnische Mittel zum Bilden von Logon-, Logoff-, Status-, Reservierungs-, Anzeige und Freigabe-Aufträgen (lona,lofa,resa,anza,frea) und im automatischen Anrufverteilungs-System (ACD) programmtechnische Mittel zum Bilden von Logon-, Logoff-, Status-, und Reservierungs-Quittierungen (lonq,lofq,staq,resq) vorgesehen sind.

## Claims

1. Method for including functions of an automatic call distribution system (ACD) in an interactive voice response system (IVR) which is called and controlled by means of communication terminals (KE) of the communication network (KN), where the interactive voice response system (IVR) and the automatic call distribution system (ACD) are connected to a communication system (KS) of a communication network (KN) and at least one agent communication terminal (AKE) connected to at least one communication system (KS) is allocated to the automatic call distribution system (ACD) **characterized by** the fact that
- the interactive voice response system (IVR) and the automatic call distribution system (ACD) are directly interconnected,
- the interactive voice response system (IVR) can be influenced by means of a communication terminal (KE) in such a way that a request to reserve (resa, resq) an available agent (A) or agent communication terminal (AKE) is transmitted from the said interactive voice response system to the automatic call distribution system (ACD), and
- in the case of a reservation of a requested agent (A) or agent communication terminal (AKE), the communication system (KS) is influenced in such a way that the relevant communication terminal (KE) is reconnected to the reserved agent communication terminal (AKE).

2. Method in accordance with Claim 1, **characterized in that** the interactive voice response system (IVR) and the automatic call distribution system (ACD) are interconnected via a local area network (LAN), where interfaces (KA) for connection to the local area network (LAN) are provided in the interactive voice response system (IVR) and the automatic call distribution system (ACD).

3. Method in accordance with Claim 1 or 2, **characterized in that** the status of at least one of the agents (A) or agent communication terminals (AKE) of the automatic call distribution system (ACD) can be interrogated by the interactive voice response system (IVR) prior to a request (resa, resq) to reserve (resa, resq) and the request (resa, resq) to reserve an agent (A) or agent communication terminal (AKE) is carried out as a function of the currently interrogated status of at least the one agent (A) or agent communication terminal (AKE).

4. Method in accordance with Claim 1 or 2, **characterized in that** the status of at least one agent (A) or agent communication terminal (AKE) of the automatic call distribution system (ACD) is interrogated cyclically by the interactive voice response system (IVR) and that a request (resa, resq) to reserve an agent (A) or agent communication terminal (AKE) is carried out as a function of the interrogated statuses of the agents (A) or agent communication terminals (AKE).

5. Method in accordance with one of Claims 1 to 4, **characterized in that** the reconnection of the relevant communication terminal (KE(x)) to the reserved agent communication terminal (AKE) is effected within the communication system (KS) by means callback and transfer features initialized by the interactive voice response system (IVR).

6. Method in accordance with one of Claims 1 to 5, **characterized in that**, in the case of agents (A) or agent communication terminals (AKE) not being currently available, a callback request transmitted by the relevant communication terminals (KE(x)) is endorsed within the interactive voice response system (IVR) with the directory number information (ri) of the relevant communication terminal (KE(x)) and that an automatic callback is initiated with the aid of a further request to reserve an available agent (A) or agent communication terminal (AKE), where firstly the connection to the reserved agent communication terminal (AKE) and then a callback connection to the relevant communication terminal (KE(X)) is set up and transferred.

7. Method in accordance with one of Claims 1 to 6, **characterized in that** instructions (a) and acknowledgments (q) are provided for requests between the interactive voice response system (IVR) and the automatic call distribution system (ACD).

8. Method in accordance with Claim 7, **characterized in that** an instruction or an acknowledgment (a, q) takes the form of
- an instruction function code or acknowledgment function code (fc),
- version information (vi) displaying the current version of the system (IVR, ACD) transmitting the instruction or acknowledgment ( ),
- an identifier (acd-id) identifying an automatic call distribution system (ACD),
- an identifier (ivr-id) identifying an interactive voice response system (IVR),
- reference information (ri) unambiguously identifying an instruction (a), and
- at least one instruction-dependent or acknowledgement-dependent parameter (p).

9. Method in accordance with one of Claims 1 to 8, **characterized in that** a logon instruction (lona) is transmitted logging the interactive voice response system (IVR) on at the automatic call distribution system (ACD) which is answered by the automatic call distribution system (ACD) with a logon acknowledgment (lonq), where access safeguarding information (pass) is inserted as a parameter (p) in the logon instruction (lona) and the check result of the logon instruction (lona) is inserted in the logon acknowledgement (lonq).

10. Method in accordance with one of Claims 1 to 9, **characterized in that** a logoff instruction (lofa) is transmitted logging the interactive voice response system (IVR) off at the automatic call distribution system (ACD) which is answered by the automatic call distribution system (ACD) with a logoff acknowledgment (lofq), where access safeguarding information (pass) is inserted as a parameter (p) in the logoff instruction (lofa) and the check result of the logoff instruction (lofa) is inserted in the logoff acknowledgement (lofq).

11. Method in accordance with one of Claims 1 to 10, **characterized in that** in the context of a request (resa, resq) to reserve an agent (A) or agent communication terminal (AKE), a status instruction (staa) requesting the current status of an automatic call distribution system (ACD) is transmitted from the interactive voice response system (IVR) to the automatic call distribution system (ACD), where at least agent information (agid) identifying an agent (A) or service information (si) displaying a group (G) of agents (A) or an agent communication terminal (AKE) or a group (G) of agent communication terminals (AKE) is inserted as a parameter (p).

12. Method in accordance with Claim 11, **characterized in that**, following the transmission of a status instruction (staa), a status acknowledgment (staq) is transmitted from the automatic call distribution system (ACD), where the following can be inserted in a status acknowledgment (staq) as a function of the status instruction (staa)
- result information (ergi) displaying the check on the admissibility of the status instruction (staa), and/or
- operating state information (zusi) displaying the operating state of the automatic call distribution system (ACD), and/or
- agent information (agi) displaying the quantity of free agents (A) or agent communication terminals (AKE), and/or
- logon information (amei) displaying the quantity of logged-on agents (A) or agent communication terminals (AKE), and/or
- seizure information (beli) displaying the quantity of seized agents or agent communication terminals (AKE), and/or
- availability information (vfbi) displaying the quantity of non-available agents (A) or agent communication terminals (AKE).

13. Method in accordance with one of Claims 1 to 12, **characterized in that** a reservation instruction (resa) effecting the reservation of agents (A) or agent communication terminals (AKE) is transmitted from the interactive voice response system (IVR) to the automatic call distribution system (ACD), where the following can be inserted as parameters (p)
- service information (si) requesting any available agent (A) or an agent communication terminal (AKE) of a group (G) of agents (A) or agent communication terminals (AKE-G), or
- an agent identifier (agid) requesting a specified person or agent (A), and/or
- waiting information (wari) displaying the timespan on waiting for a specified or one of a group (G) of agents (A) or agent communication terminals (AKE), and/or
- status information (stai) displaying the reporting or non-reporting of the status of the reservation instruction (resa).

14. Method in accordance with Claim 13, **characterized in that**, following the transmission of a reservation instruction (resa), a reservation acknowledgment (resq) is transmitted from the automatic call distribution system (ACD), where the following is inserted in a reservation acknowledgment (resq) as a function of the reservation instruction (resa)
- result information (ergi) displaying the check on the admissibility of the reservation instruction (resa),
- service information (si) displaying the group (G) of agents (A) or agent communication terminals (AKE-G),
- an agent identifier (agid) displaying the reservation of the requested agent (A),
- and directory number information (rni) displaying the directory number of the reserved agent (A) or agent communication terminal (AKE), or
- agent status information (asti) displaying the status of the requested agent (A) or agent communication terminal (AKE).

15. Method in accordance with Claim 13 or 14, **characterized in that** a release instruction (frea) releasing a reserved agent (A) or agent communication terminal (AKE) can be transmitted from the interactive voice response system (IVR) to the automatic call distribution system (ACD), where an agent identifier (agid) displaying the identifier of the agent (A) or agent communication terminal (AKE) to be released is inserted as a parameter (p).

16. Method in accordance with one of Claims 1 to 15, **characterized in that** a display instruction (anza) effecting a display at a specified agent communication terminal (AKE) can be transmitted from the interactive voice response system (IVR) to the automatic call distribution system (ACD), where the following is inserted as a parameter (p)
- an agent identifier (agid) identifying a specified agent (A) or agent communication terminal (AKE),
- information (text) to be displayed at the agent communication terminal (AKE), and optionally
- time information (zei) displaying the duration of display at the agent communication terminal (AKE), and/or
- warning information (aufi) effecting a warning tone and/or a warning display at the relevant agent communication terminal (AKE).

17. A communication arrangement for including functions of an automatic call distribution system (ACD) in an interactive voice response system (IVR) which is called and controlled by means of communication terminals (KE) in a communication network (KN) **characterized in that**
- the interactive voice response system (IVR) and the automatic call distribution system (ACD) are connected to a communication system (KS) of the communication network (KN), where at least one agent communication terminal (AKE) connected to at least one communication system (KS) is allocated to the automatic call distribution system (ACD),
- an interface (KA) for connection to a local area network (LAN) is implemented in the interactive voice response system (IVR) and the automatic call distribution system (ACD),
- the two interfaces (KA) are connected to each other via a local area network (LAN),
- program-based means are provided in the interactive voice response system (IVR) and the automatic call distribution system (ACD) which can be influenced by a communication terminal (KE) connected to the interactive voice response system (IVR) in such a way that a request to reserve an available agent (A) or agent communication terminal (AKE) is transmitted from the interactive voice response system (IVR) to the interconnected automatic call distribution system (ACD),
- means for reserving available agents (A) or agent communication terminals (AKE) and for notifying the reservation to the interactive voice response system (IVR) are provided in the automatic call distribution system (ACD), and
- means for influencing the allocated communication system (KS) in such a way that the relevant communication terminal (KE) is reconnected to the reserved agent communication terminal (AKE) are provided in the interactive voice response system (IVR).

18. A communication arrangement in accordance with Claim 17, **characterized in that** program-based means for creating logon, logoff, status, reservation, display and release instructions (lona, lofa, resa, anza, frea) are provided in the interactive voice response system (IVR) and program-based means for creating logon, logoff, status and reservation acknowledgments (lonq, lofq, staq, resq) are provided in the automatic call distribution system (ACD).

## Revendications

1. Procédé d'inclusion de fonctions d'un système automatique de répartition d'appels (ACD) dans un système de réponse vocale interactif (IVR) qui est appelé et commandé par des terminaux de communication (KE) du réseau de communication (KN), le système de réponse vocale interactif (IVR) et le système automatique de répartition d'appels (ACD) étant connectés à un système de communication (KS) d'un réseau de communication (KN) et au moins un terminal de communication agent (AKE) connecté à au moins un système de communication (KS) étant affecté au système automatique de répartition d'appels (ACD), **caractérisé en ce que**
- le système de réponse vocale interactif (IVR) et le système automatique de répartition d'appels (ACD) sont directement couplés;
- le terminal de communication (KE) peut influencer le système de réponse vocale interactif (IVR) de manière telle que celui-ci transmet une demande de réservation (resa, resq) d'un agent (A) resp. d'un terminal de communication agent (AKE) disponibles au système automatique de répartition d'appels (ACD) et
- en cas de réservation d'un agent (A) resp. d'un terminal de communication agent (AKE) demandés, le système de communication (KS) est influencé de manière telle que le terminal de communication concerné (KE) est recouplé sur le terminal de communication agent (AKE) réservé.

2. Procédé selon la revendication 1, **caractérisé en ce que** le système de réponse vocale interactif (IVR) et le système automatique de répartition d'appels (ACD) sont couplés par l'intermédiaire d'un réseau local (LAN), des interfaces (KA) de connexion au réseau local (LAN) étant prévues dans le système de réponse vocale interactif (IVR) et dans le système automatique de répartition d'appels (ACD).

3. Procédé selon la revendication 1 ou 2, **caractérisé en ce que**, préalablement à une demande (resa, resq) de réservation (resa, resq) par le système de réponse vocale interactif (IVR), le statut d'au moins l'un des agents (A) resp. des terminaux de communication agents (AKE) du système automatique de répartition des appels (ACD) peut être demandé et que la demande (resa, resq) de réservation d'un agent (A) resp. d'un terminal de communication agent (AKE) est effectuée en fonction du statut actuellement demandé de l'au moins un agent (A) resp. terminal de communication agent (AKE).

4. Procédé selon la revendication 1 ou 2, **caractérisé en ce que** le statut d'au moins un agent (A) resp. terminal de communication agent (AKE) du système automatique de répartition d'appels (ACD) est demandé cycliquement par le système de réponse vocal interactif et **en ce qu'**une demande (resa, resq) de réservation d'un agent (A) resp. d'un terminal de communication agent (AKE) est effectuée en fonction des statuts demandés des agents (A) resp. des terminaux de communication agents (AKE).

5. Procédé selon l'une des revendications 1 à 4, **caractérisé en ce que**, dans le système de communication (KS), le recouplage du terminal de communication (KE(X)) concerné sur le terminal de communication agent (AKE) réservé est provoqué par des caractéristiques de prestation «rétrodemande» et «transférer» initialisées par le système de réponse vocale interactif (IVR).

6. Procédé selon l'une des revendications 1 à 5, **caractérisé en ce qu'**il est pris note, dans le système de réponse vocale interactif (IVR), d'une demande de rappel transmise par les terminaux de communication (KE(X)) concernés avec l'information de numéro d'appel (ri) du terminal de communication (KE(X)) concerné, dans le cas d'agents (A) resp. de terminaux de communication agents (AKE) actuellement non disponibles, et **en ce qu'**un rappel automatique est initialisé à l'aide d'une autre demande de réservation d'un agent (A) resp. d'un terminal de communication agent (AKE) disponibles, la liaison avec le terminal de communication agent (AKE) réservé d'abord et une liaison de rétrodemande avec le terminal de communication (KE(X)) concerné ensuite étant établies et transférées.

7. Procédé selon l'une des revendications 1 à 6, **caractérisé en ce que** sont prévues des commandes (a) et des confirmations (q) pour des demandes entre le système de réponse vocale interactif (IVR) et le système automatique de répartition d'appels (ACD).

8. Procédé selon la revendications 7, **caractérisé en ce qu'**une commande resp. une confirmation (a, q) comprend
- un code fonctionnel de commande resp. de confirmation (fc),
- une information de version (vi) indiquant la version actuelle du système (IVR, ACD) qui transmet la commande resp. la confirmation (a, q),
- une identification (acd-id) qui identifie un système automatique de répartition d'appels (ACD),
- une identification (ivr-id) qui identifie un système de réponse vocale interactif (IVR),
- une information de référence (ri) qui identifie univoquement une commande (a) et
- au moins un paramètre (p) dépendant de la commande resp. de la confirmation.

9. Procédé selon l'une des revendications 1 à 8, **caractérisé en ce qu'**une commande logon (lona) déclarant le système de réponse vocale interactif (IVR) au système automatique de répartition des appels (ACD) est transmise, à laquelle il est répondu par le système automatique de répartition d'appels (ACD) par une confirmation logon (lonq), une information de protection des accès (pass) étant insérée en tant que paramètre (p) dans la commande logon (lona) et le résultat de la vérification de la commande logon (lona) étant inséré dans la confirmation logon (lonq).

10. Procédé selon l'une des revendications 1 à 9, **caractérisé en ce qu'**une commande logoff (lofa) faisant sortir le système de réponse vocale interactif (IVR) du système automatique de répartition des appels (ACD) est transmise, à laquelle il est répondu par le système automatique de répartition d'appels (ACD) par une confirmation logoff (lofq), une information de protection des accès (pass) étant insérée en tant que paramètre (p) dans la commande logoff (lofa) et le résultat de la vérification de la commande logoff (lofa) étant inséré dans la confirmation logoff (lofq).

11. Procédé selon l'une des revendications 1 à 10, **caractérisé en ce que**, dans le cadre d'une demande (resa, resq) de réservation d'un agent (A) resp. d'un terminal de communication agent (AKE), une commande de statut (staa) demandant le statut actuel d'un système automatique de répartition d'appels (ACD) est transmise par le système de réponse vocale interactif (IVR) au système automatique de répartition d'appels (ACD), au moins une information d'agent (agid) identifiant un agent (A) ou une information de service (si) indiquant un groupe (G) d'agents (A) resp. un terminal de communication agent (AKE) ou un groupe (G) de terminaux de communication agents (AKE) étant insérée en tant que paramètres (p).

12. Procédé selon la revendication 11, **caractérisé en ce que**, après la transmission d'une commande de statut (staa), une confirmation de statut (staq) est transmise par le système automatique de répartition d'appels (ACD),
- une information de résultat (ergi) qui indique la vérification de l'admissibilité de la commande de statut (staa) et/ou
- une information d'état (zusi) qui indique l'état de fonctionnement du système automatique de répartition d'appels (ACD) et/ou
- une information d'agent (agi) qui indique le nombre des agents (A) resp. des terminaux de communication agents (AKE) libres et/ou
- une information de déclaration (amei) qui indique le nombre des agents (A) resp. des terminaux de communication agents (AKE) déclarés et/ou
- une information d'occupation (beli) qui indique le nombre des agents (A) resp. des terminaux de communication agents (AKE) occupés et/ou
- une information de disponibilité (vfbi) qui indique le nombre des agents (A) resp. des terminaux de communication agents (AKE) non disponibles
pouvant être insérées dans une confirmation de statut (staq) en fonction de la commande de statut (staa).

13. Procédé selon l'une des revendications 1 à 12, **caractérisé en ce qu'**une commande de réservation (resa) provoquant la réservation d'agents (A) resp. de terminaux de communication agents (AKE) est transmise par le système de réponse vocale interactif (IVR) au système automatique de répartition d'appels (ACD),
- une information de service (si) qui demande un agent (A) resp. un terminal de communication agent (AKE) quelconques disponibles d'un groupe (G) d'agents (A) resp. de terminaux de communication agents (AKE-G) ou
- une identification d'agent (agid) qui demande une personne déterminée resp. un agent (A) déterminé et/ou
- une information d'attente (wari) qui indique la durée de l'attente d'un agent (A) resp. un terminal de communication agent (AKE) déterminé ou d'un agent (A) resp. un terminal de communication agent (AKE) déterminé d'un groupe (G) d'agents (A) resp. de terminaux de communication agents (AKE-G) et/ou
- une information de statut (stai) qui indique le rapport ou le non-rapport du statut de la commande de réservation (resa)
pouvant être insérées en tant que paramètres (p).

14. Procédé selon la revendication 13, **caractérisé en ce que**, après la transmission d'une commande de réservation (resa), une confirmation de réservation (resq) est transmise par le système automatique de répartition d'appels (ACD),
- une information de résultat (ergi) qui indique la vérification de l'admissibilité de la commande de réservation (resa),
- une information de service (si) qui indique le groupe (G) d'agents (A) resp. de terminaux de communication agents (AKE-G),
- une identification d'agent (agid) qui indique la réservation de l'agent (A) demandé et
- une information de numéro d'appel (rni) qui indique le numéro d'appel de l'agent (A) resp. du terminal de communication agent (AKE) réservés ou
- une information de statut d'agent (asti) qui indique le statut de l'agent (A) resp. du terminal de communication agent (AKE) demandés
étant insérées dans une confirmation de réservation (staq) en fonction de la commande de réservation (resa).

15. Procédé selon la revendication 13 ou 14, **caractérisé en ce qu'**une commande de libération (frea) qui libère un agent (A) resp. un terminal de communication agent (AKE) réservés peut être transmise par le système de réponse vocale interactif (IVR) au système automatique de répartition d'appels (ACD), une identification d'agent (agid) qui indique l'identification de l'agent (A) resp. du terminal de communication agent (AKE) à libérer étant insérée en tant que paramètre (p).

16. Procédé selon l'une des revendications 1 à 15, **caractérisé en ce qu'**une commande d'indication (anza) provoquant une indication au niveau d'un terminal de communication agent (AKE) déterminé peut être transmise par le système de réponse vocale interactif (IVR) au système automatique de répartition d'appels (ACD),
- une identification d'agent (agid) qui identifie un agent (A) resp. un terminal de communication agent (AKE) déterminés,
- une information (text) à indiquer au niveau du terminal de communication agent (AKE) et, optionnellement,
- une information temporelle (zei) qui indique la durée de l'indication au niveau du terminal de communication agent (AKE) et/ou
- une information d'attention (aufi) provoquant, au niveau du terminal de communication agent (AKE) concerné, un son d'attention et/ou une indication d'attention
étant insérées en tant que paramètres (p).

17. Ensemble de communication pour l'inclusion de fonctions d'un système automatique de répartition d'appels (ACD) dans un système de réponse vocale interactif (IVR) qui est appelé et commandé par des terminaux de communication (KE) d'un réseau de communication (KN), **caractérisé en ce que**
- le système de réponse vocale interactif (IVR) et le système automatique de répartition d'appels (ACD) sont connectés à un système de communication (KS) du réseau de communication (KN), au moins un terminal de communication agent (AKE) connecté à au moins un système de communication (KS) étant affecté au système automatique de répartition d'appels (ACD),
- une interface (KA) de connexion à un réseau local (LAN) est réalisée dans le système de réponse vocal interactif (IVR) et dans le système automatique de répartition d'appels (ACD),
- les deux interfaces (KA) sont reliées entre elles par l'intermédiaire d'un réseau local (LAN),
- des moyens de programme étant prévus dans le système de réponse vocal interactif (IVR) et dans le système automatique de répartition d'appels (ACD), lesquels
sont influençables par un terminal de communication (KE) relié au système de réponse vocale interactif (IVR) de manière telle qu'une demande de réservation d'un agent (A) resp. d'un terminal de communication agent (AKE) disponibles est transmise par le système de réponse vocale interactif (IVR) au système automatique de répartition d'appels (ACD) couplé,
- des moyens de réservation d'agents (A) resp. de terminaux de communication agents (AKE) disponibles et d'informationdu système de réponse vocale interactif (IVR) sur la réservation sont prévus dans le système automatique de répartition d'appels (ACD) et
- des moyens pour influencer le système de communication (KS) associé sont prévus dans le système de réponse vocale interactif (IVR) de manière telle que le terminal de communication (KE) concerné est recouplé sur le terminal de communication agent (AKE) réservé.

18. Ensemble de communication selon la revendication 17, **caractérisé en ce que** sont prévus, dans le système de réponse vocale interactif (IVR), des moyens de programme pour constituer des commandes logon, logoff, de statut, de réservation, d'indication et de libération (lona, lofa, resa, anza, frea) et, dans le système automatique de répartition d'appels (ACD), des moyens de programme pour constituer des confirmations logon, logoff, de statut et de réservation (lonq, lofq, staq, resq).
